## Europäisches Patentamt
## European Patent Office
## Office européen des brevets

(19)

(11) Numéro de publication: **0 167 418**
**B1**

(12) # FASCICULE DE BREVET EUROPÉEN

(45) Date de publication du fascicule du brevet:
02.09.87

(51) Int. Cl.⁴: **F 22 B 1/06,** F 28 F 1/00, B 23 K 1/12

(21) Numéro de dépôt: **85400850.5**

(22) Date de dépôt: **30.04.85**

(54) Tube à double paroi pour un échangeur de chaleur et procédé de réalisation de ce tube.

(30) Priorité: **04.05.84 FR 8406940**

(43) Date de publication de la demande:
**06.01.86 Bulletin 86/2**

(45) Mention de la délivrance du brevet:
**02.09.87 Bulletin 87/36**

(84) Etats contractants désignés:
**BE CH DE GB IT LI LU NL SE**

(56) Documents cité:
**FR-A-1 502 010**
**FR-A-2 132 019**
**GB-A-703 081**
**GB-A-728 131**
**GB-A-804 592**
**GB-A-822 705**
**GB-A-960 628**

(73) Titulaire: **NOVATOME, La Boursidière R.N. 186, F-92357 Le Plessis Robinson (FR)**

(72) Inventeur: **Libin, Bernard, 71 avenue Auguste Renoir, F-78160 Marly Le Roi (FR)**

(74) Mandataire: **Moncheny, Michel, c/o Cabinet Lavoix 2 Place d'Estienne d'Orves, F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

## Description

L'invention concerne un tube à double paroi pour un échangeur de chaleur à deux fluides constitué par deux parois tubulaires coaxiales enfilées l'une dans l'autre pratiquement sans jeu et un procédé de réalisation de ce tube.

On connaît des échangeurs de chaleur à deux fluides comportant des tubes à double paroi, la paroi interne à plus faible diamètre étant destinée à venir en contact avec l'un des fluides par sa surface interne et la paroi externe à plus grand diamètre avec l'autre fluide par sa surface externe.

Bien que les deux parois soient enfilées l'une dans l'autre avec un jeu mécanique très faible, un gaz peut néanmoins cheminer, dans la plupart des cas, entre ces deux parois, si bien qu'en cas de perçage d'une des deux parois, le fluide en contact avec la paroi percée peut venir se répandre et cheminer dans l'espace entre les deux parois. On peut ainsi détecter des fuites éventuelles par perçage de l'une ou l'autre des parois, en reliant l'espace de très faible dimension entre les parois, à une chambre de détection.

La double paroi améliore donc la sécurité de l'échangeur puisqu'une double barrière est interposée entre les deux fluides et qu'une fuite à travers l'une d'elles peut être détectée avant que l'intégrité de l'autre ne soit mise en cause.

De tels tubes à double paroi sont utilisés, par exemple, dans le cas des générateurs de vapeur des réacteurs nucléaires à neutrons rapides dont les fluides d'échange sont du sodium liquide et de l'eau qui se vaporise grâce à la chaleur transportée par le sodium liquide. Le sodium liquide à température élevée (500°C ou plus) vient en contact avec la surface externe de la paroi extérieure du tube. L'eau et la vapeur sous très forte pression et a une température voisine de celle du sodium liquide circulent à l'intérieur du tube en contact avec la surface interne de la paroi intérieure.

Dans cette application aux générateurs de vapeur des réacteurs à neutrons rapides, le fait d'utiliser des tubes à double paroi augmente le coût de construction de l'appareil mais la sécurité en est accrue dans des proportions considérables.

L'utilisation de générateurs de vapeur à tubes à double paroi permet même d'envisager la suppression du circuit secondaire du réacteur nucléaire l'échauffement de l'eau et sa transformation en vapeur pouvant être obtenus directement par la chaleur transportée par le sodium primaire. En effet, la probabilité d'apparition d'une fuite devient très faible et la détection d'une fuite éventuelle est obtenue d'une façon sûre et très rapide dans un générateur de vapeur à tubes à double paroi. La probabilité de voir apparaître et évoluer une fuite de telle sorte qu'il se produise un mélange notable de sodium primaire et d'eau ou de vapeur eau donc très faible et pratiquement nulle.

Les tubes à double paroi pour échangeur de chaleur peuvent être réalisés par des procédés différents, ce qui leur confère des caractéristiques thermiques ou mécaniques différentes.

Un premier procédé consiste à enfiler les parois tubulaires l'une dans l'autre puis à les fretter par précontrainte mécanique, par exemple par co-étirage. Dans de tels tubes, l'aire de contact réelle entre les deux parois ne représente qu'approximativement 5 % de l'aire totale des surfaces en vis-à-vis des deux parois. Le transfert thermique au travers des deux parois se trouve ainsi réduit de façon sensible par l'existence de l'interface et risque de se dégrader au cours du temps par relachement de la pression de contact. De plus il se produit des dilatations différentielles des parois, des glissements longitudinaux entre ces deux parois et donc une usure à leur interface. En revanche, en cas de perçage de l'une des deux parois, le fluide traversant la paroi percée et pénétrant dans l'interstice entre les deux parois peut y cheminer soit sur toute la longueur du tube, soit pour rejoindre des rainures usinées dans l'une des surfaces en contact et aboutir ainsi aux extrémités du tube relié à une chambre de détection. En effet, bien que l'interstice entre les deux tubes ait une très faible largeur, le fluide n'est arrêté par aucune barrière puisque la surface de contact réelle des deux parois a une étendue faible.

Un second procédé consiste à lier métallurgiquement les surfaces en vis-à-vis des deux parois, par exemple par une brasure, le métal de brasure recouvrant la totalité des surfaces en contact des deux parois. De cette façon, on améliore considérablement le transfert thermique, on évite qu'il se dégrade dans le temps et l'on supprime le glissement longitudinal relatif des parois du tube, lors de sa dilatation. En revanche, la détection des fuites ne pourrait théoriquement se faire que par des rainures usinées dans l'une des surfaces en contact des deux parois, et toute fuite issue d'un perçage situé entre les rainures a une forte probabilité de ne pas les rejoindre ou bien d'y déboucher au bout d'un temps très long. De plus, il est difficile d'assurer que ces rainures offrent des chemins de passage continus au fluide après brasage.

On connaît par le GB-A-822.705 un tube à double paroi comportant entre son tube interne et son tube externe, une bande métallique enroulée en hélice en contact intime avec les surfaces en regard des deux tubes et liée par brasure à l'un et à l'autre tubes. Un tel tube à double paroi peut permettre une détection de fuite dans l'espace entre le tube interne et le tube externe. Cependant, il n'est pas possible d'obtenir par cette technique un tube dont l'espace intérieur de la double paroi est de très faible épaisseur. En outre, la technique de fabrication est complexe.

Le but de l'invention est donc de proposer un tube à double paroi pour un échangeur de chaleur à deux fluides constitué par deux tubes coaxiaux enfilés l'un dans l'autre avec un très faible jeu, puis frettés, le tube interne à plus petit diamètre étant destiné à venir en contact avec l'un des fluides par sa surface interne et le tube externe à plus grand diamètre avec l'autre fluide, par sa surface externe, ce tube permettant d'obtenir un transfert thermique suffisant et ne se dégradant pas dans le temps, entre les deux fluides, une détection sûre des fuites éventuelles dans une paroi du tube et un assemblage résistant et facile à réaliser des deux tubes pour éviter tout glissement lors des dilatations du tube à double paroi.

Dans ce but, la surface externe du tube interne et la surface interne du tube externe sont reliées par une couche mince de métal de brasure suivant des zones discontinues aussi bien dans la direction circonférentielle que dans la direction longitudinale du tube représentant dans leur ensemble entre 5 et 15 % de la surface en vis-à-vis des parois interne et externe du tube.

Afin de bien faire comprendre l'invention, on va maintenant décrire, à titre d'example non limitatif, en se référant aux figures jointes en annexe, plusieurs modes de réalisation de tubes à double paroi suivant l'invention.

La figure 1 est une coupe transversale par un plan perpendiculaire à son axe d'un tube à double paroi suivant l'invention.

Les figures 2a, 2b et 2c sont des vues en perspective de la paroi interne d'un tube à double paroi suivant l'invention.

La figure 3 est une vue en coupe transversale par un plan perpendiculaire à son axe d'un tube à double paroi suivant l'invention et suivant une variante de réalisation.

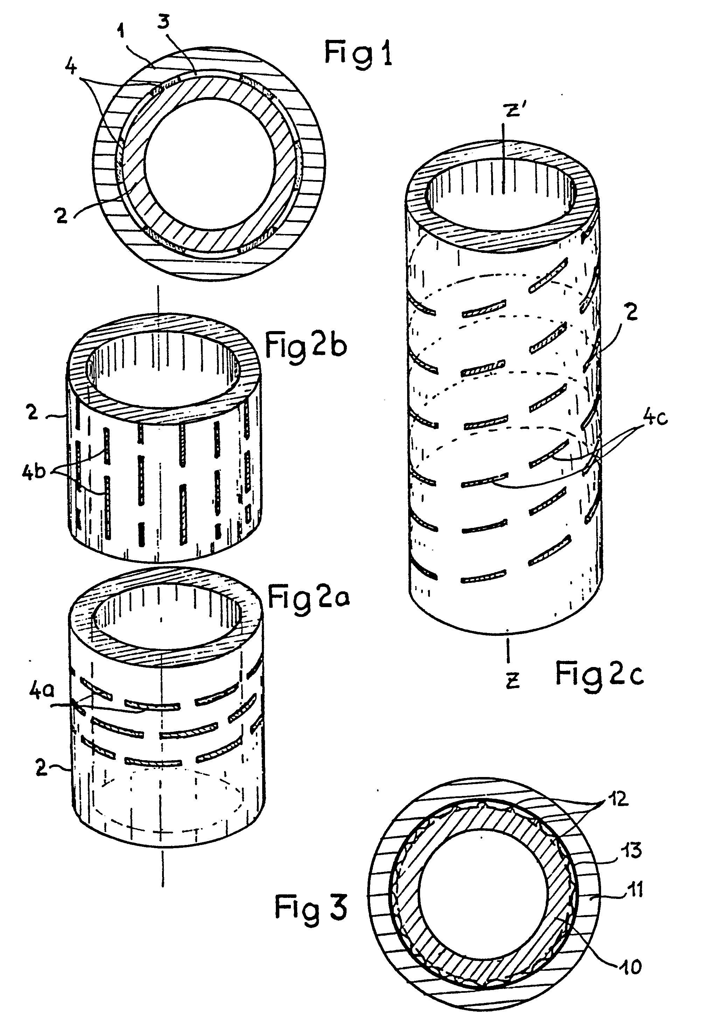

Sur la figure 1, on voit un tube à double paroi comportant une paroi externe 1 et une paroi interne 2 enfilées l'une dans l'autre avec un très faible jeu 3. Une partie de l'espace annulaire 3 et une partie seulement est occupée par des zones brasées 4 discontinues suivant la circonférence du tube à double paroi. Ces zones brasées 4 assurent la jonction des tubes 1 et 2 sans supprimer l'espace annulaire 3 de très faible épaisseur. L'épaisseur de l'espace 3 et des zones brasées 4 est de l'ordre de 10 à 30 microns.

On va maintenant se référer aux figures 1 et 2a, 2b et 2c pour décrire le procédé d'obtention du tube à double paroi, suivant un premier mode de réalisation.

Sur les figures 2a, 2b et 2c, on voit la paroi interne 2 d'un tube à double paroi tel que représenté sur la figure 1, sur laquelle on a déposé des bandes de très faible épaisseur d'un matériau de brasure permettant la jonction des deux parois du tube.

Sur la figure 2a, les zones brasées 4a ont la forme de segments annulaires discontinus disposés les uns à la suite des autres sur toute la périphérie de la paroi interne 2. Suivant la direction longitudinale du tube, les zones brasées 4a sont disposées suivant des régions annulaires successives dont les segments 4a sont décalés légèrement suivant la direction circonférentielle du tube.

Sur la figure 2b, les zones de brasure 4b sont disposées suivant des portions de génératrice les unes à la suite des autres avec des intervalles entre deux zones 4b successives, les génératrices suivant lesquelles sont disposées les bandes de brasure étant espacées d'une distance circonférentielle sensiblement constante sur la surface de la paroi 2.

Enfin, les zones brasées 4c sur la paroi interne 2 représentée à la figure 2c sont disposées suivant des portions d'une ou plusieurs hélices ayant pour axe l'axe ZZ' du tube.

Pour la réalisation de tubes à double paroi d'un générateur de vapeur d'un réacteur nucléaire à neutrons rapides dont le diamètre extérieur est égal à 16 mm et le diamètre intérieur à 10 mm, on utilise pour constituer les deux parois des tubes en acier inoxydable ferritique ou austénitique ou encore des tubes en alliage de nickel dont les diamètres extérieurs sont voisins de 16 mm et 12 mm respectivement et les épaisseurs voisines de 1 à 2 mm.

Le tube extérieur est calibré de façon que son diamètre extérieur soit très légèrement supérieur à 16 mm et son diamètre intérieur légèrement supérieur à 12 mm. De la même façon, les diamètres extérieur et intérieur du tube 2 constituant la paroi interne sont également un peu supérieurs à 12 et 10 mm respectivement.

On réalise sur toute la longueur du tube 2 des dépôts de brasure suivant une disposition telle que représentée à la figure 2a, à la figure 2b ou à la figure 2c. Ces dépôts de brasure ont une épaisseur de 10 à 30 microns, une largeur de 1 à 2 mm et les différentes bandes successives, soit annulaires (figure 2a), soit suivant des génératrices (figure 2b) ou soit encore suivant des hélices successives (figure 2c) sont espacées de 20 à 40 mm.

Cet espacement (ou pas) des dépôts de brasure sera déterminé en fonction de la largeur de la bande de brasure de façon à vérifier la relation:

Largeur de bande/pas = 0,05 à 0,15.

La surface interne de la paroi externe 1 peut elle-même être revêtue d'une couche continue de brasure d'une épaisseur très faible.

L'alliage de brasure est choisi en fonction des nuances dans lesquelles sont réalisées les deux parois du tube.

Lorsque la paroi interne 2 a été recouverte de bandes discontinues de brasure comme représenté à l'une des figures 2a, 2b et 2c, cette paroi 2 est introduite à l'intérieur de la paroi externe 1 dans laquelle elle est enfilée sur toute sa longueur.

Les jeux prévus au départ permettent de réaliser cette opération sans difficulté malgré les dépôts de brasure sur la paroi interne.

L'ensemble des deux tubes 1 et 2 enfilés l'un sur l'autre est alors réétiré puis porté à une température de l'ordre de 1000°C pour réaliser la jonction métallurgique entre les deux parois, suivant leurs surfaces en vis-à-vis recouvertes de brasure.

Le produit obtenu est tel que représenté sur la figure 1. Ce tube à double paroi a l'avantage de comporter deux parois parfaitement fixées longitudinalement l'une par rapport à l'autre par brasure, si bien que les deux parois ne peuvent se déplacer lors des dilatations du tube en service.

De plus, la zone de contact entre les deux parois a toujours une surface supérieure à 5 % de la surface des parois en vis-à-vis, cette surface de contact pouvant aller jusqu'à 15 % de la surface totale. Malgré tout, l'espace annulaire 3 entre les deux parois du tube reste continu sur toute la longueur de ce tube, les bandes de brasure 4 étant discontinues aussi bien dans la direction circonférentielle que dans la direction longitudinale du tube. De cette façon, dans le cas d'une fuite sur l'une des parois, le fluide en contact avec cette paroi peut venir dans l'interstice 3 et cheminer très facilement jusqu'aux extrémités du tube où celui-ci peut être relié à des chambres de détection de fuite.

Les deux parois sont maintenues l'une sur l'autre à la fois mécaniquement par le frettage consécutif au réétirage des tubes et métallurgiquement par les bandes de brasure. Au moment du réétirage, la surface interne de la paroi externe du tube vient en contact avec les bandes de brasure déposées sur la surface externe du tube interne, si bien que pendant le chauffage consécutif à l'étirage des tubes une jonction métallurgique est créée dans les zones correspondant aux dépôts de brasure.

Les tubes à double paroi peuvent être réalisés par un second procédé.

Les parois interne et externe sont constituées par des tubes dont les matériaux et dimensions sont identiques à ce qui a été indiqué plus haut.

On dispose sur la surface extérieure de la paroi interne 2 des caches discontinus suivant une répartition analogue à la répartition des zones de brasure 4a, 4b ou 4c représentées aux figures 2a, 2b et 2c respectivement.

La surface externe de la paroi interne 2 est alors soumise à un traitement d'oxydation chimique ou électrochimique qui produit le dépôt d'une couche d'oxyde sur toute la surface externe de la paroi 2 à l'exception des zones recouvertes par les caches. Les caches sont alors enlevés et la surface interne de la paroi externe 1 est recouverte d'une couche de brasure continue d'une épaisseur de 10 à 30 microns. Les tubes 1 et 2 sont enfilés l'un sur l'autre puis coétirés et enfin chauffés à 1000°C. La liaison par brasure des deux tubes ne s'effectue que dans les zones non oxydées c'est-à-dire dans des zones correspondant aux bandes 4a, 4b ou 4c. Le tube à double paroi obtenu a des caractéristiques pratiquement identiques au tube obtenu par le procédé consistant à déposer des bandes de brasure sur la surface externe du tube interne.

On peut également utiliser un troisième procédé pour réaliser un tube à double paroi suivant l'invention. Ce procédé sera décrit en se référant à la figure 3.

On voit que la paroi interne 10 a été usinée de façon que sa rugosité soit relativement forte. Les aspérités 12 de la surface externe de cette paroi 10 ont une dimension radiale moyenne de l'ordre de 30 microns.

On dépose sur la surface interne du tube externe 11 une couche 13 d'alliage de brasure d'une épaisseur inférieure à la rugosité moyenne. Les deux tubes sont alors enfilés l'un sur l'autre, coétirés puis maintenus pendant un certain temps à une température suffisante pour assurer leur liaison métallurgique, par exemple une température de 1000°, comme précédemment.

On voit sur la figure 3 que le résultat de ces opérations est un tube à double paroi dont les zones de jonction sont constituées par les parties supérieures des aspérités 12.

L'ensemble de la surface de ces zones de contact des aspérités avec la surface intérieure du tube 11 recouverte de brasure représente de 5 à 15 % de la surface totale en vis-à-vis des deux parois 10 et 11.

Le tube à double paroi représenté à la figure 3 présente les mêmes avantages que le tube représenté à la figure 1, à savoir une liaison métallurgique entre les deux parois évitant les glissements relatifs de ces deux parois dans la direction longitudinale, une capacité d'échange thermique suffisante et un espace continu pour la circulation de gaz de fuite entre les deux parois.

On voit donc que les tubes suivant l'invention rassemblent les avantages des tubes à double paroi simplement frettées et des tubes à double paroi frettées et soudées sur toute leur surface.

L'invention ne se limite pas aux modes de réalisation qui ont été décrits; elle en comporte au contraire toutes les variantes.

C'est ainsi que les zones en métal de brasure intercalées entre les deux parois du tube peuvent avoir une forme et une répartition différentes de celles qui ont été décrites.

On peut également imaginer d'autres procédés pour réaliser l'assemblage des deux parois par des zones de brasure discontinues. Cette zone brasée de l'interface des deux parois doit cependant représenter au minimum 5 % et au maximum 15 % de la surface totale de l'interface.

L'épaisseur du métal de brasure entre les deux parois qui correspond également à la dimension maximum de l'interstice devra être comprise entre 10 et 30 microns.

Enfin, les tubes à double paroi selon l'invention peuvent être utilisés dans tout type d'échangeur de chaleur à deux fluides.

**Revendications**

1. Tube à double paroi pour un échangeur de chaleur à deux fluides constitué par deux tubes (1, 2 - 10, 11) coaxiaux, enfilés l'un dans l'autre avec un jeu très faible, puis frettés, le tube interne (2, 10) à plus petit diamètre étant destiné à venir en contact avec l'un des fluides par sa surface interne et le tube externe (1, 11) à plus grand diamètre avec l'autre fluide, par sa surface externe,

caractérisé par le fait que la surface externe du tube interne (2, 10) et la surface interne du tube externe (1, 11) sont reliées par une couche mince de métal de brasure (4, 13) suivant des zones discontinues aussi bien dans la direction circonférentielle que dans la direction longitudinale du tube représentant dans leur ensemble entre 5 et 15 % de la surface en vis-à-vis des parois internes (2, 10) et externes (1, 11) du tube.

2. Tube à double paroi suivant la revendication 1,

caractérisé par le fait que l'épaisseur de la couche de métal de brasure (4, 13) est comprise entre 10 et 30 microns.

3. Tube à double paroi suivant l'une quelconque des revendications 1 et 2,

caractérisé par le fait que les zones (4a) de liaison par brasure entre les tubes (1, 2) ont la forme de secteurs annulaires (4a) séparés par des interstices et disposés suivant une pluralité de couronnes successives suivant la direction longitudinale du tube, les interstices dans chacune des couronnes étant décalés par rapport aux interstices des couronnes voisines.

4. Tube à double paroi suivant l'une quelconque des revendications 1 et 2,

caractérisé par le fait que les zones de liaison par brasure des tubes (1, 2) sont constituées par des bandes (4b) discontinues disposées suivant les génératrices des surfaces en contact des tubes (1, 2) séparés par des interstices, les génératrices suivant lesquelles les zones de liaison (4b) sont disposées étant réparties de façon sensiblement équidistante sur la surface de liaison entre les tubes (1, 2).

5. Tube à double paroi suivant l'une quelconque des revendications 1 et 2,

caractérisé par le fait que les zones (4c) de liaison par brasure entre les tubes (1, 2) sont constituées par des portions d'hélices ayant pour axe l'axe du tube, des interstices étant ménagés entre les zones de liaison (4c) en forme de portions d'hélices.

6. Tube à double paroi suivant l'une quelconque des revendications 1 et 2

caractérisé par le fait que les zones de liaison par brasure entre les tubes (10, 11) sont constituées par les sommets des aspérités (12) du tube interne (10) à forte rugosité.

7. Procédé de réalisation d'un tube à double paroi suivant la revendication 1,

caractérisé par le fait qu'on réalise des dépôts discontinus de métal de brasure (4) sur la surface externe d'un tube (2) qu'on enfile ce tube (2) sur toute sa longueur à l'intérieur d'un tube (1) qu'on réalise un co-étirage des deux tubes enfilés l'un sur l'autre et qu'on porte les deux tubes co-étirés à une température suffisante pour assurer leur liaison métallurgique par le métal de brasure.

8. Procédé de réalisation d'un tube à double paroi suivant la revendication 1,

caractérisé par le fait qu'on dispose des caches suivant des zones discontinues sur la surface externe d'un tube (2) qu'on oxyde cette surface externe sur toute ses parties non recouvertes par un cache, qu'on enlève les caches de la surface externe du tube (2), qu'on enfile ce tube (2) sur toute sa longueur à l'intérieur d'un tube (1) dont la surface interne est recouverte d'une couche continue de métal de brasure, qu'on réalise un co-étirage des deux tubes enfilés l'un sur l'autre et qu'on chauffe les deux tubes (1, 2) co-étirés à une température suffisante pour assurer leur liaison métallurgique par le métal de brasure.

9. Procédé de réalisation d'un tube à double paroi suivant la revendication 1,

caractérisé par le fait qu'on usine la surface extérieure d'un tube (10) de façon que cette surface externe présente une rugosité importante de l'ordre de 30 microns, qu'on enfile ce tube (10) sur toute sa longueur à l'intérieur d'un tube (11) dont la surface interne est revêtue d'une couche de métal de brasure continue (13), d'épaisseur inférieure à la rugosité moyenne, qu'on réalise un co-étirage des tubes (10 et 11) enfilés l'un sur l'autre et qu'on chauffe ces tubes (10, 11) co-étirés à une température suffisante pour assurer leur liaison métallurgique par le métal de brasure.

**Patentansprüche**

1. Doppelwandiges Rohr für einen Wärmetauscher mit zwei Fluiden, das zwei Rohre (1, 2 - 10, 11) aufweist, die koaxial mit sehr geringem Spiel aufeinandergesteckt und anschließend warmgewalzt sind, wobei das innere Rohr (2, 10) mit geringerem Durchmesser dazu bestimmt ist, mit seiner Innenfläche mit einem der Fluide in Berührung zu kommen, und wobei das äußere Rohr (1, 11) mit größerem Durchmesser dazu bestimmt ist, mit seiner Außenfläche mit dem anderen Fluid in Berührung zu kommen,

dadurch gekennzeichnet,

daß die Außenfläche des Innenrohres (2, 10) und die innere Fläche des äußeren Rohrs (1, 11) über eine dünne Metall-Lötschicht (4, 13) in Bereichen verbunden sind, die sowohl in Umfangsrichtung als auch in Längsrichtung der Rohre diskontinuierlich sind und etwa 5 bis 15 % der Innenwandungen (2, 10) bzw. Außenwandungen (1, 11) des Rohres ausmachen.

2. Doppelwandiges Rohr nach Anspruch 1,
dadurch gekennzeichnet,
daß die Dicke der Metall-Lötschicht (4, 13) zwischen 10 und 30 µm liegt.

3. Doppelwandiges Rohr nach einem der Ansprüche 1 und 2,
dadurch gekennzeichnet,
daß die Bereiche (4a) der Verbindung mittels Verlötung zwischen den Rohren (1, 2) die Form von ringförmigen Abschnitten (4a) haben, die durch Zwischenstreifen voneinander getrennt sind und in einer Folge mehrerer Kränze in Längsrichtung des Rohrs angeordnet sind, wobei die Zwischenstreifen jedes Kranzes gegenüber den Zwischenstreifen des nächsten Kranzes versetzt sind.

4. Doppelwandiges Rohr nach einem der Ansprüche 1 und 2,
dadurch gekennzeichnet,
daß die Lötverbindungsbereiche der Rohre (1, 2) aus diskontinuierlichen Bändern (4b) bestehen, die entlang der Erzeugenden der Kontaktflächen der Rohre (1, 2) angeordnet sind und durch Zwischenstreifen getrennt sind, wobei die Erzeugenden, entlang der die Verbindungsbereiche (4b) angeordnet sind, im wesentlichen mit gleichem Abstand auf der Verbindungsfläche zwischen den Rohren (1, 2) angeordnet sind.

5. Doppelwandiges Rohr nach einem der Ansprüche 1 und 2,
dadurch gekennzeichnet,
daß die Lötverbindungsbereiche (4c) zwischen den Rohren (1, 2) aus Spiralteilen bestehen, deren Achse die Rohrachse ist, wobei Zwischenstreifen zwischen den Verbindungsbereichen (4c) in Form von Spiralteilen angeordnet sind.

6. Doppelwandiges Rohr nach einem der Ansprüche 1 und 2,
dadurch gekennzeichnet,
daß die Lötverbindungsbereiche zwischen den Rohren (10, 11) aus Rauhigkeitsspitzen (12) des Innenrohrs (10) mit hoher Rauhigkeit gebildet werden.

7. Verfahren zur Herstellung eines doppelwandigen Rohres nach Anspruch 1,
dadurch gekennzeichnet,
daß diskontinuierliche Ansammlungen von Lötmetall (4) auf der Außenfläche eines Rohrs (2) erzeugt werden, wonach dieses Rohr (2) mit seiner gesamten Länge ins Innere eines Rohrs (1) eingeführt wird, wonach ein Zusammenwalzen der ineinandergesteckten Rohre durchgeführt wird, wobei die beiden zusammengewalzten Rohre auf eine ausreichende Temperatur gebracht werden, um ihre metallurgische Verbindung mittels des Lötmetalls sicherzustellen.

8. Verfahren zur Herstellung eines doppelwandigen Rohres nach Anspruch 1,
dadurch gekennzeichnet,
daß gemäß der diskontinuierlichen Zonen auf der Außenfläche eines Rohres Abdeckungen auf diesem (2) angebracht werden, daß diese Außenfläche in den nicht durch die Abdeckung abgedeckten Bereichen oxidiert wird, daß die Abdeckungen von der Außenfläche des Rohrs (2) entfernt werden, daß dieses Rohr (2) mit seiner gesamten Länge in das Innere eines Rohrs (1) eingeführt wird, dessen innere Oberfläche mit einer kontinuierlichen Schicht Lötmetall bedeckt ist, daß ein Zusammenwalzen der beiden ineinander gesteckten Rohre erfolgt und die beiden Rohre (1, 2) auf eine ausreichende Temperatur gebracht werden, um deren metallurgische Verbindung mittels des Lötmetalls zu gewährleisten.

9. Verfahren zur Herstellung eines doppelwandigen Rohres nach Anspruch 1,
dadurch gekennzeichnet,
daß die äußere Oberfläche eines Rohrs (10) derart spanend bearbeitet wird, daß diese äußere Oberfläche eine wesentliche Rauhigkeit der Größenordnung von 30 µm aufweist, daß dieses Rohr (10) mit seiner gesamten Länge ins Innere eines Rohrs (11) eingefügt wird, dessen Innenfläche mit einer kontinuierlichen Schicht aus Lötmetall (13) bedeckt ist, wobei diese Schicht eine Dicke hat, die kleiner als die mittlere Oberflächenrauhigkeit ist, daß ein Zusammenwalzen der ineinandergesteckten Rohre (10, 11) erfolgt und die zusammengewalzten Rohre (10, 11) auf eine Temperatur gebracht werden, die ausreicht, um deren metallurgische Verbindung mittels des Lötmetalls zu gewährleisten.

**Claims**

1. A double-wall tube for a heat exchanger having two fluids, comprising two coaxial tubes (1, 2-10, 11) disposed one inside the other with a very small clearance, then made to have a tight fit therebetween, the inner tube (2, 10) having the smaller diameter being adapted to come into contact with one of said fluids by its inner surface and the outer tube (1, 11) having a larger diameter being adapted to come into contact with the other fluid by its outer surface, characterized by the fact that the outer surface of the inner tube (2, 10) and the inner surface of the outer tube (1, 11) are interconnected by a thin layer of brazing metal (4, 13) in regions which are discontinuous both in the circumferential direction and in the longitudinal direction of the tube and together represent between 5 and 15 % of the confronting surfaces of the inner (2, 10) and outer walls (1, 11) of the tube.

2. A double-wall tube according to claim 1, characterized by the fact that the thickness of the layer of brazing metal (4, 13) is between 10 and 30 microns.

3. A double-wall tube according to claim 1 or 2, characterized by the fact that the regions (4a) of connection by brazing between the tubes (1,2) have the shape of annular sectors (4a) separated by gaps and disposed in a plurality of successive ring arrangements in the longitudinal direction of the tube, the gaps in each of the ring arrangements being in staggered relation relative to the gaps of the neighbouring arrangements.

4. A double-wall tube according to claim 1 or 2, characterized by the fact that the regions of connection by brazing of the tube (1, 2) are constituted by discontinuous bands (4b) disposed along generatrices of the contacting surfaces of the tubes (1, 2) separated by gaps, the generatrices along which the regions of connection (4b) are disposed being arranged in a substantially equidistant manner on the surface of connection between the tubes (1, 2).

5. A double-wall tube according to claim 1 or 2, characterized by the fact that the regions (4c) of connection by brazing between the tubes (1, 2) are constituted by helical portions having for axis the axis of the tube, gaps being provided between the regions (4c) of connection in the form of helical portions.

6. A double-wall tube according to claim 1 or 2, characterized by the fact that the regions of connection by brasing between the tubes (10,11) are constituted by peaks of asperities on the inner tube (10) having high roughness.

7. A method for constructing a double-wall tube according to claim 1, comprising effecting discontinuous deposits of brasing metal (4) on the outer surface of a tube (2), introducing said tube (2) throughout its lenght inside a tube (1), effecting a co-drawing of the two tubes mounted one inside the other and bringing the co-drawn tubes to a sufficient temperature to ensure their metallurgical connection by means of the brazing metal.

8. A method for constructing a double-wall tube according to claim 1, characterized by the fact that masks are disposed in discontinuous regions on the outer surface of a tube (2), said outer surface is oxydized throughout the parts thereof not covered by a mask, the masks are removed from the outer surface of the tube (2), said tube (2) is mounted throughout its length inside a tube (1) whose inner surface is covered with a continuous layer of brazing metal, a co-drawing of the two tubes (1, 2) mounted one inside the other is effected, and the two co-drawn tubes (1, 2) are heated to a sufficient temperature to ensure their metallurgical connection by means of the brazing metal.

9. A method for constructing a double-wall tube according to claim 1, characterized by the fact that the outer surface of a tube (10) is machined so that said outer surface has a high roughness, of the order of 30 microns, said tube (10) is mounted throughout its length inside a tube (11) whose inner surface is covered with a layer of continuous brazing metal (13) whose thickness is less than the mean roughness, a co-drawing of the tubes (10,11) mounted one inside the other, is effected, and the co-drawn tubes (10,11) are heated to sufficient temperature to ensure their metallurgical connection by means of the brazing metal.

Fig 1

Fig 2b

Fig 2a

Fig 2c

Fig 3